# FASCICULE DE BREVET EUROPEEN

(11) **EP 0 689 932 B1**
(45) Date de publication et mention de la délivrance du brevet: **16.02.2000**
(21) Numéro de dépôt: 95401476.7
(22) Date de dépôt: 21.06.1995
(51) Int. Cl.: B30B 9/04, B30B 9/22, B30B 15/06

(54) **Procédé d'extraction d'un liquide contenu dans une matière, notamment du raisin, et ensemble de pressurage pour sa mise en oeuvre**
Verfahren zum Ausscheiden von Flüssigkeiten aus festen Stoffen, insbesondere Trauben und Presseinrichtung zu seiner Durchführung
Process for extracting the liquid content from a solid substance, in particular grapes and pressing assembly for carrying it out

(30) Priorité: 30.06.1994 FR 9408101
(43) Date de publication de la demande: 03.01.1996
(73) Titulaire: SOMAVI, F-34510 Florensac (FR)
(72) Inventeur: Pera, Didier, F-34290 Montblanc (FR); Pera, Jean, F-34300 Cap d'Agde (FR)
(74) Mandataire: Santarelli, Marc

(56) Documents cités:
- EP-A- 0 193 147
- EP-A- 0 310 842
- FR-A- 2 567 385

## Description

L'invention a trait à l'extraction d'un liquide contenu dans une matière, par exemple du raisin ou du marc de raisin au cours de la vinification.

On sait qu'on réalise généralement cette extraction en introduisant la matière dans une cuve munie d'une grille de séparation entre liquide et solide contre laquelle on comprime ensuite la matière afin que le liquide s'écoule à travers la grille, la compression étant par exemple obtenue par une vis sans fin, ou encore pneumatiquement à l'aide d'une membrane.

On connaît déjà par EP-A-0 193 147, une presse d'extraction d'eau pour textiles, dans laquelle la matière textile est introduite dans un cadre de remplissage posé sur une base perforée contre laquelle la matière textile est comprimée avec un piston gonflable afin que l'eau s'écoule au travers des perforations de la base, le piston gonflable comportant un corps rigide métallique et une membrane en caoutchouc élastique montée sur la périphérie du piston rigide de sorte qu'il existe un espace fermé délimité par le piston et par la membrane, le piston étant entraîné par un dispositif de levage du type classiquement utilisé dans une presse, ce dispositif de levage abaissant le piston jusqu'à une position de verrouillage sur le châssis de la presse, le piston, lors de ce mouvement de descente vers le cadre contenant la matière textile, étant dans un état où l'espace délimité par le corps rigide métallique et la membrane en caoutchouc élastique est réduit à zéro, le piston étant introduit dans cet état à l'intérieur de l'espace délimité par le cadre de remplissage, la membrane élastique se trouvant au contact de la matière textile dans la position de verrouillage du piston, position dans laquelle de l'eau sous forte pression est introduite entre le corps métallique et la membrane en caoutchouc élastique, de sorte que cette membrane se déforme et comprime fortement la matière textile afin que l'eau qu'elle contient s'écoule par les perforations de la base

L'invention vise à permettre de réaliser l'extraction du liquide d'une façon simple, commode et économique, notamment en ce qui concerne la compression de la matière contre la grille.

Elle propose à cet effet un procédé d'extraction d'un liquide contenu dans une matière, dans lequel on introduit ladite matière dans une cuve munie d'une grille de séparation entre liquide et solide contre laquelle on comprime ensuite la matière, avec un piston gonflable, afin que le liquide s'écoule à travers la grille, et dans lequel on prévoit que ladite cuve et ledit piston gonflable sont adaptés à coopérer de sorte que ledit piston, à l'état dégonflé, puisse être introduit dans la cuve, l'extraction du liquide comportant l'introduction dans la cuve de la matière puis du piston à l'état dégonflé et ensuite le gonflage de celui-ci, caractérisé en ce que :
- on prévoit que ladite cuve et ledit piston gonflable soient adaptés en outre à coopérer de sorte que dans la cuve, à l'état gonflé, le piston soit capable de former une cloison transversale coulissante séparant la cuve, de façon étanche, en deux compartiments dont un premier contient la grille de séparation tandis que le deuxième peut être fermé et recevoir un agent de pression ; et
- l'extraction du liquide s'effectue en introduisant dans la cuve la matière puis le piston à l'état dégonflé et ensuite en gonflant celui-ci de sorte que la matière se trouve dans ledit premier compartiment, puis en fermant ledit deuxième compartiment et en y injectant ensuite ledit agent de pression de sorte que le piston gonflé s'applique contre et vient comprimer la matière, l'agent de pression étant ensuite évacué dudit deuxième compartiment, le piston dégonflé et extrait de la cuve, et la matière asséchée évacuée de la cuve.

On voit que le procédé que propose l'invention peut être mis en oeuvre sans nécessiter de moyens compliqués à fabriquer, on peut même utiliser une cuve déjà existante en prévoyant un ensemble de pressurage à piston gonflable approprié, ce dernier étant relativement économique puisqu'il ne nécessite que peu de matières premières.

En outre, le fait que le piston gonflable puisse être entièrement extrait de la cuve permet de nettoyer celle-ci sans être gêné par la présence de moyens de pressurage ou de compression, de sorte que cette opération peut être réalisée facilement et rapidement tandis qu'au surplus on minimise les risques de ne pas éliminer complètement certains éléments de la matière asséchée, ce qui est particulièrement appréciable lorsque le procédé intervient dans la fabrication d'un produit alimentaire.

Selon des caractéristiques préférées de l'invention, on gonfle le piston à une pression supérieure à celle à laquelle on porte ensuite ledit deuxième compartiment lorsqu'on y injecte ledit agent de pression.

On est ainsi sûr que le piston reste bien gonflé, et qu'il conserve une certaine rigidité utile à son bon fonctionnement.

Selon d'autres caractéristiques préférées, on dispose ladite cuve avec ladite grille de séparation située dans le bas, et on y introduit la matière et le piston gonflable par le haut.

Ainsi, la matière (introduite la première) et le piston (introduit en deuxième) se positionnent dans la cuve directement grâce à la gravité, avec le premier compartiment contenant la matière située sous le piston, et le deuxième au-dessus de ce dernier.

Selon d'autres caractéristiques préférées, on introduit le piston gonflable dans la cuve par une même ouverture que la matière.

Ainsi, aucune ouverture spéciale n'est nécessaire pour introduire le piston dans la cuve.

Selon d'autres caractéristiques préférées, on injecte ledit agent de pression à travers une trappe de fermeture du deuxième compartiment de la cuve.

On évite ainsi d'avoir à pratiquer un orifice spécifique dans la paroi de la cuve.

Selon d'autres caractéristiques préférées, on prévoit pour le piston gonflable une canalisation souple d'alimentation ou d'évacuation d'un agent de pression, ladite canalisation passant à travers une trappe de fermeture du deuxième compartiment de la cuve.

Ainsi, on évite d'avoir à pratiquer un trou dans la paroi de la cuve pour le gonflage ou le dégonflage du piston, la canalisation souple fixée au piston simplifiant ces dernières manoeuvres puisqu'on peut les commander depuis l'extérieur de la cuve, et également les manoeuvres de mise en place et d'extraction du piston gonflable, la canalisation souple jouant alors le rôle d'un lien de manutention du piston.

Selon d'autres caractéristiques préférées, pour des raisons de commodité et d'économie, on utilise un même piston gonflable pour plusieurs cuves similaires.

Le procédé qui vient d'être exposé peut être mis en oeuvre avec toute sorte de matières contenant du liquide, mais convient particulièrement bien pour le raisin, qu'on peut d'ailleurs vinifier au moins en partie dans la cuve même, en l'y laissant séjourner jusqu'à ce que le marc vienne flotter sur le liquide, en ouvrant ensuite un robinet de soutirage pour laisser ce liquide s'écouler, puis en comprimant grâce audit piston gonflable le marc tel qu'il s'est déposé après écoulement du premier liquide, afin d'obtenir un deuxième liquide qui s'exprime de ce marc à travers ladite grille de séparation.

Suivant les cas, le séjour du raisin dans la cuve, où les différentes composantes du raisin sont en contact, permet d'obtenir une simple homogénéisation aromatique du produit avec éventuellement extraction de la couleur, ou alors une fermentation de l'ensemble, le procédé selon l'invention permettant d'obtenir un maximum de liquide directement avec la cuve, c'est-à-dire non seulement le premier liquide qui se sépare spontanément du marc, mais aussi un deuxième liquide obtenu par compression du marc.

Ce deuxième liquide, bien qu'il soit obtenu par pressurage, est ainsi exprimé d'un marc qui n'a pas subi la moindre action mécanique de trituration puisqu'il est mis sous pression directement dans l'état sous lequel il s'était déposé après écoulage du premier liquide.

Par conséquent, aucun des effets néfastes provoqués par la trituration du marc ne peut se retrouver dans le deuxième liquide, qui est donc d'une très haute qualité.

Selon d'autres caractéristiques préférées, on prévoit dans le fond de la cuve un moyen transporteur pour évacuer la matière asséchée à travers une porte prévue à cet effet.

On évite ainsi d'avoir à effectuer manuellement cette extraction.

On notera, dans le cas où le procédé est mis en oeuvre pour la vinification du raisin comme exposé précédemment, que l'on réalise dans la même cuve à la fois le stockage pour la vinification, l'extraction maximum des jus avec compression pneumatique et la vidange par des moyens mécaniques.

L'invention propose également, sous un deuxième aspect, un ensemble de pressurage convenant à la mise en oeuvre du procédé qui vient d'être exposé, dans une cuve prédéterminée.

Cet ensemble de pressurage se caractérise en ce qu'il comporte un piston gonflable formé : par une enveloppe en matière souple non élastique présentant deux panneaux d'extrémité opposés similaires ayant un contour extérieur correspondant à la section transversale de ladite cuve et un panneau latéral présentant deux bords opposés chacun relié au bord extérieur de l'un des panneaux d'extrémité, et par une pluralité de liens de même longueur disposée entre lesdits panneaux d'extrémité.

Grâce à ces liens, à l'état gonflé, le piston prend, au moins en périphérie, une forme à peu près rectangulaire en section transversale, et non une forme bombée qui nuirait à son coulissement dans la cuve et/ou à l'étanchéité de la séparation entre les deux compartiments qu'il délimite.

Selon des caractéristiques préférées, ledit piston est gonflable en totalité, y compris au centre.

Un tel piston gonflable, qui ne comporte donc pas de simple panneau de matière souple au centre, offre l'avantage de pouvoir se trouver à l'état gonflé sous une pression relativement modérée, et en tout cas plus faible que s'il n'était pas gonflé au centre (si un simple panneau de matière souple était prévu au centre, il aurait tendance sous l'effet de la différence de pression entre le premier et le deuxième compartiment, à se bomber vers le premier compartiment, et donc à faire diminuer le diamètre du piston, d'où la nécessité de prévoir une forte pression pour la partie gonflable annulaire située autour du simple panneau).

L'exposé de l'invention sera maintenant poursuivi par la description d'un exemple de réalisation, donnée ci-après à titre illustratif et non limitatif, en référence aux dessins annexés sur lesquels :
- la figure 1 est une vue en élévation-coupe prise dans une cuve de macération de la vendange, à l'état vide ;
- la figure 2 est une vue similaire de cette cuve, dans l'état où elle se trouve après que la vendange y ait été introduite, qu'elle y ait macéré et/ou fermenté, que le liquide s'étant séparé spontanément du marc ait été écoulé à l'extérieur, et que le piston gonflable ait été mis en place au-dessus du marc restant dans la cuve, gonflé, et que la trappe supérieure de la cuve ait été fermée ;
- la figure 3 est une vue schématique en perspective, avec arrachement partiel, montrant le piston gonflable, et plus généralement l'ensemble de pressurage que l'on voit mis en place dans la cuve sur la figure 2 ; et
- la figure 4 montre de façon schématique les robinets et régulateurs de pression dont cet ensemble est muni.

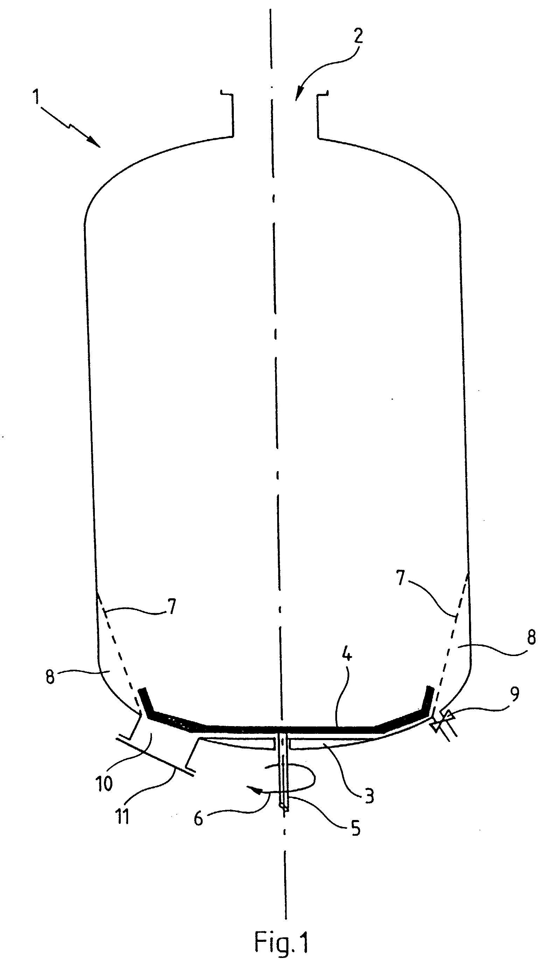

La cuve 1 montrée sur la figure 1 a une forme globalement cylindrique à section circulaire. Elle est disposée verticalement et repose sur le sol par des pieds non représentés. Elle comporte à son sommet une ouverture 2 servant à l'introduction du raisin, et à l'intérieur, contre son fond 3, un rotor 4 à pales, disposées coaxialement à la cuve, solidaire d'un arbre d'entraînement 5 qui part sous le rotor, traverse le fond de la cuve, et rejoint un moteur d'entraînement non représenté qui sert à le faire tourner comme montré par la flèche 6 ; une grille 7 de séparation entre liquide et solide étant disposée en regard du bas de la paroi latérale de la cuve 1, avec laquelle elle définit une chambre 8 de récupération du liquide munie dans son fond d'un robinet de soutirage 9, la grille 7 convergeant vers le rotor 4, une porte 10 obturable par un couvercle 11 étant disposée au niveau des extrémités des pales du rotor 4.

On utilise la cuve 1 pour la vinification du raisin en introduisant celui-ci par l'ouverture supérieure 2 jusqu'à remplir la cuve, la porte 10 étant fermée par le couvercle 11, le rotor 4 étant à l'arrêt, et le robinet 9 fermé.

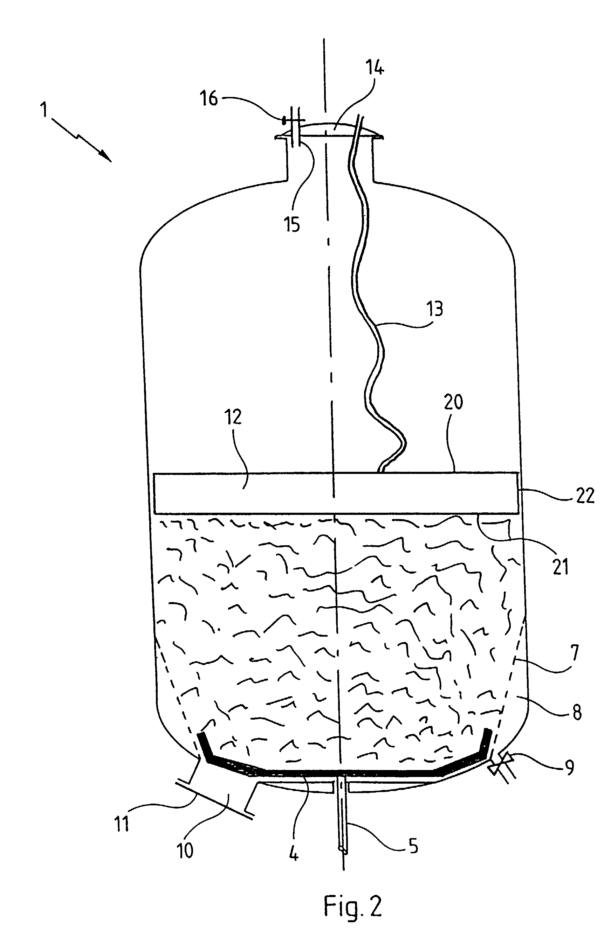

Ainsi qu'exposé précédemment, on laisse séjourner le raisin un certain temps, jusqu'à ce que le marc vienne flotter sur le liquide, on ouvre alors le robinet de soutirage 9 et on laisse le liquide s'évacuer, opération à la fin de laquelle le marc repose sur le fond de la cuve, sur le rotor 4 et sur la grille 7, comme montré sur la figure 2.

On introduit alors, par l'ouverture 2, à l'état dégonflé, le piston 12, et on place celui-ci au-dessus du marc à l'aide de la canalisation souple 13 à laquelle il est relié, à la manière d'un lien de suspension. On connecte alors cette canalisation à une source d'air comprimé, et le piston se gonfle jusqu'à être dans l'état montré sur la figure 2, où il forme une cloison transversale coulissante séparant la cuve 1, de façon étanche, en un compartiment inférieur où se trouve le marc et la grille de séparation 7, et en un compartiment supérieur qui peut être fermé par la trappe 14 et recevoir de l'air comprimé injecté par l'intermédiaire de la canalisation 15 qui passe à travers la trappe 14, le compartiment supérieur étant alors mis sous pression de sorte que le piston s'applique contre le marc et vient le comprimer, une partie du liquide qu'il contient traversant la grille 7 et s'évacuant de la cuve 1 en passant à travers le robinet 9.

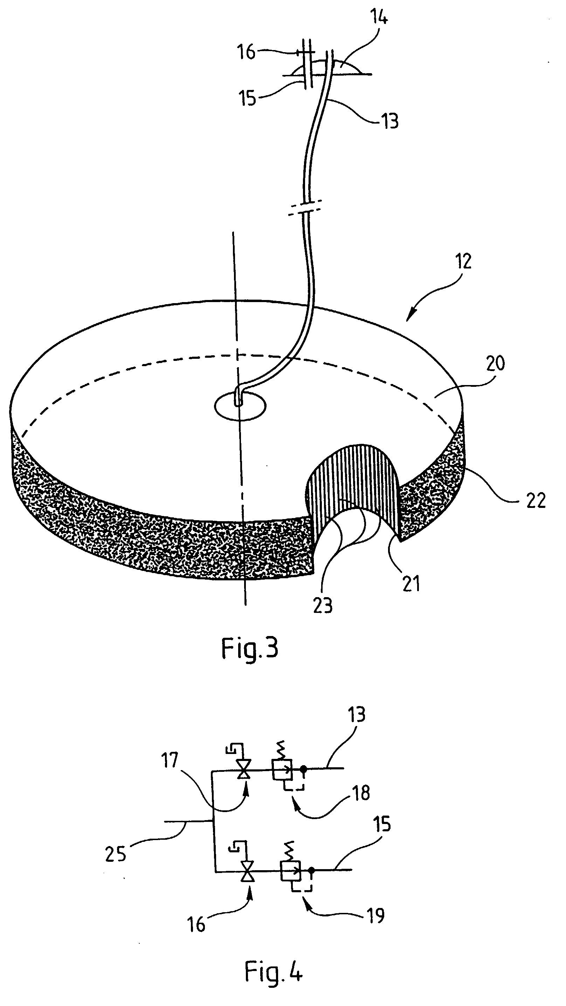

Lorsque le liquide cesse de s'écouler, on place le robinet 16 de la canalisation 15 dans la position où l'air comprimé du compartiment supérieur va à l'échappement, éventuellement on attend un certain temps puis on remet sous pression le compartiement supérieur de la cuve, une ou plusieurs fois, ensuite on dégonfle le piston 12 en évacuant l'air comprimé qui le gonflait grâce au robinet 17 (figure 4) qu'on place dans la position où il met l'intérieur du piston 12 en communication avec l'échappement, et on extrait le piston 12 de la cuve, et plus généralement l'ensemble de pressurage qui comporte également la canalisation 13, la canalisation 15 et la trappe 14.

On ouvre alors la porte 10 en enlevant le couvercle 11, et on fait tourner le rotor 4, de sorte que le marc asséché s'évacue par la porte 10.

On va maintenant décrire plus en détail l'ensemble de pressurage utilisé dans la cuve 1, à l'appui des figures 3 et 4.

Comme on le voit sur la figure 3, le piston gonflable 12 est formé par une enveloppe en matière souple non élastique formée dans une sorte de toile du type de celle avec laquelle on fabrique les bateaux pneumatiques, cette enveloppe présentant deux panneaux d'extrémité similaires opposés 20 et 21 ayant un contour extérieur correspondant à la section transversale de la cuve 1, et un panneau latéral 22 dont les bords supérieur et inférieur sont chacun reliés au bord extérieur du panneau 20 ou du panneau 21, une pluralité de liens 23 (non représentés sur la figure 2) de même longueur étant disposée entre les panneaux 20 et 21, ce qui permet à ces derniers de rester parallèles lorsque le piston est à l'état gonflé, comme montré sur la figure 2, et au panneau 22 d'être disposé à peu près à angle droit par rapport aux panneaux 20 et 21.

En outre du piston gonflable 12, l'ensemble de pressurage comporte la canalisation souple 13, la canalisation 15, la trappe 14, les régulateurs de pression 18 et 19 (figure 4) disposés respectivement sur la canalisation 13 et sur la canalisation 15, et les robinets à trois lumières 16 et 17 disposés respectivement sur la canalisation 15 et sur la canalisation 13, chacune de celles-ci étant reliée à une canalisation 25 prévue pour être connectée à une source d'air comprimé.

Chacun des robinets 16 et 17 présente trois positions où la partie de la canalisation située en aval de lui est respectivement isolée, en communication avec la partie amont de la canalisation, et à l'échappement. La position de communication avec l'aval de la canalisation sert à gonfler le piston 12 ou à mettre sous pression le compartiment supérieur de la cuve 1, la position isolée sert à maintenir le piston gonflé ou le compartiment supérieur sous pression, et la position de communication avec l'échappement sert à dégonfler le piston 12 ou à mettre hors pression le compartiment supérieur de la cuve.

Les régulateurs de pression 18 et 19 (non représentés sur les figures 2 et 3) servent à fixer respectivement la pression à laquelle est gonflé le piston 12, et la pression à laquelle est porté le compartiment supérieur de la cuve, cette dernière pression étant inférieure à la première, afin que le piston reste bien gonflé en fonctionnement. A titre d'exemple, la pression de gonflage du piston peut être fixée entre 0,5 et 1 bar, et le compartiment supérieur de la cuve peut être porté à une pression inférieure de 0,1 à 0,2 bar à celle de la pression de gonflage du piston.

De nombreuses variantes sont possibles en fonction des circonstances, la cuve et le piston gonflable pouvant notamment être agencés différemment.

On rappelle à cet égard que l'invention ne se limite pas aux exemples décrits et représentés.

## Revendications

1. Procédé d'extraction d'un liquide contenu dans une matière, dans lequel on introduit ladite matière dans une cuve (1) munie d'une grille (7) de séparation entre liquide et solide contre laquelle on comprime ensuite la matière, avec un piston gonflable, afin que le liquide s'écoule à travers la grille (7), et dans lequel on prévoit que ladite cuve et ledit piston gonflable sont adaptés à coopérer de sorte que ledit piston, à l'état dégonflé, puisse être introduit dans la cuve, l'extraction du liquide comportant l'introduction dans la cuve de la matière puis du piston à l'état dégonflé et ensuite le gonflage de celui-ci, caractérisé en ce que :
- on prévoit que ladite cuve (1) et ledit piston gonflable (12) soient adaptés en outre à coopérer de sorte que dans la cuve, à l'état gonflé, le piston soit capable de former une cloison transversale coulissante séparant la cuve, de façon étanche, en deux compartiments dont un premier contient la grille de séparation (7) tandis que le deuxième peut être fermé et recevoir un agent de pression ; et
- l'extraction du liquide s'effectue en introduisant dans la cuve la matière puis le piston (12) à l'état dégonflé et ensuite en gonflant celui-ci de sorte que la matière se trouve dans ledit premier compartiment, puis en fermant ledit deuxième compartiment et en y injectant ensuite ledit agent de pression de sorte que le piston gonflé s'applique contre et vient comprimer la matière, l'agent de pression étant ensuite évacué dudit deuxième compartiment, le piston (12) dégonflé et extrait de la cuve (1), et la matière asséchée évacuée de la cuve.

2. Procédé selon la revendication 1, caractérisé en ce qu'on gonfle le piston à une pression supérieure à celle à laquelle on porte ensuite ledit deuxième compartiment lorsqu'on y injecte ledit agent de pression.

3. Procédé selon l'une quelconque des revendications 1 ou 2, caractérisé en ce qu'on dispose ladite cuve (1) avec ladite grille (7) de séparation située dans le bas, et on y introduit la matière et le piston gonflable (12) par le haut.

4. Procédé selon l'une quelconque des revendications 1 à 3, caractérisé en ce qu'on introduit le piston gonflable (12) dans la cuve par une même ouverture (2) que la matière.

5. Procédé selon l'une quelconque des revendications 1 à 4, caractérisé en ce qu'on injecte ledit agent de pression à travers une trappe (14) de fermeture du deuxième compartiment de la cuve (1).

6. Procédé selon l'une quelconque des revendications 1 à 5, caractérisé en ce qu'on prévoit pour le piston gonflable (12) une canalisation souple (13) d'alimentation ou d'évacuation d'un agent de pression, ladite canalisation (13) passant à travers une trappe (14) de fermeture du deuxième compartiment de la cuve (1).

7. Procédé selon l'une quelconque des revendications 1 à 6, caractérisé en ce qu'on prévoit dans le fond de la cuve (1) un moyen transporteur (4) pour évacuer la matière asséchée à travers une porte (10) prévue à cet effet.

8. Procédé selon la revendication 7, caractérisé en ce que ledit moyen transporteur comporte un rotor (4) à pales coaxial à la cuve (1), ladite porte (10) étant disposée au niveau des extrémités du rotor (4).

9. Procédé selon l'une quelconque des revendications 7 ou 8, caractérisé en ce que ladite grille de séparation (7) est disposée en regard du bas de la paroi latérale de la cuve (1), avec laquelle elle définit une chambre (8) de récupération du liquide munie dans son fond d'un robinet (9) de soutirage, ladite grille (7) convergeant vers ledit moyen transporteur (4).

10. Procédé selon l'une quelconque des revendications 1 à 9, caractérisé en ce qu'on utilise un même piston gonflable (12) pour plusieurs cuves similaires (1).

11. Procédé selon l'une quelconque des revendications 1 à 10, caractérisé en ce que ladite matière est du raisin qu'on vinifie dans ladite cuve en l'y laissant séjourner jusqu'à ce que le marc vienne flotter sur le liquide, en ouvrant ensuite un robinet de soutirage pour laisser ce liquide s'écouler, puis en comprimant grâce audit piston gonflable le marc tel qu'il s'est déposé après écoulement du premier liquide, afin d'obtenir un deuxième liquide qui s'exprime de ce marc à travers ladite grille de séparation (7).

12. Ensemble de pressurage convenant à la mise en oeuvre du procédé selon l'une quelconque des revendications 1 à 11 dans une cuve prédéterminée, caractérisé en ce qu'il comporte un piston gonflable formé : par une enveloppe en matière souple non élastique présentant deux panneaux d'extrémité opposés similaires (20, 21) ayant un contour extérieur correspondant à la section transversale de ladite cuve (1) et un panneau latéral (22) présentant deux bords opposés chacun relié au bord extérieur de l'un des panneaux d'extrémité (20, 21), et par une pluralité de liens (23) de même longueur disposée entre lesdits panneaux d'extrémité (20, 21).

13. Ensemble selon la revendication 12, caractérisé en ce que ledit piston (12) est gonflable en totalité, y compris au centre.

14. Ensemble selon l'une quelconque des revendications 12 ou 13, caractérisé en ce qu'il comporte une canalisation souple (13) d'alimentation ou d'évacuation d'un agent de pression dans ou hors du piston gonflable (12), ainsi qu'une trappe (14) de fermeture de ladite cuve (1), à travers laquelle passe ladite canalisation (13).

15. Ensemble selon la revendication 14, caractérisé en ce que ladite trappe de fermeture (14) est également traversée par une canalisation (15) d'injection ou d'évacuation d'un agent de pression dans ou hors de ladite cuve, chacune desdites canalisations (13, 14) étant prévue pour être reliée à une source d'agent de pression à travers un robinet (16, 17) et un régulateur de pression (18, 19).

## Patentansprüche

1. Verfahren zum Ausscheiden von Flüssigkeiten aus Stoffen, gemäß dem der Stoff in einen Behälter (1) eingeführt wird, welcher mit einem Trenngitter (7) zwischen Flüssigkeit und Feststoff ausgestattet ist, gegen das anschließend der Stoff mit einem aufpumpbaren Kolben gedrückt wird, damit die Flüssigkeit über das Gitter (7) abfließt, und gemäß dem vorgesehen ist, daß der Behälter und der aufpumpbare Kolben dafür ausgelegt sind, so zusammenzuwirken, daß der Kolben im Leerzustand in den Behälter eingeführt werden kann, wobei das Ausscheiden der Flüssigkeit das Einführen des Stoffes und anschließend des Kolbens im Leerzustand in den Behälter und darauf folgend das Aufpumpen desselben umfaßt, dadurch gekennzeichnet, daß:
• vorgesehen wird, daß der Behälter (1) und der aufpumpbare Kolben (12) darüber hinaus dafür ausgelegt sind, so zusammenzuwirken, daß der Kolben im aufgepumpten Zustand im Behälter eine transversale verschiebbare Trennwand bilden kann, die den Behälter abdichtend in zwei Teilräume teilt, von denen ein erster das Trenngitter (7) enthält, während der zweite geschlossen werden und ein Druckmittel aufnehmen kann, und
• das Ausscheiden der Flüssigkeit bewirkt wird, indem in den Behälter der Stoff und dann der Kolben (12) im Leerzustand eingeführt werden und dann jener aufgepumpt wird, so daß sich der Stoff im ersten Teilraum befindet, und dann der zweite Teilraum geschlossen wird und in ihn nachfolgend das Druckmittel eingeleitet wird, so daß der aufgepumpte Kolben sich gegen den Stoff setzt und ihn komprimiert, wobei das Druckmittel anschließend aus dem zweiten Teilraum ausgeleitet wird, der Kolben (12) entleert und aus dem Behälter (1) ausgeschieden wird und der entwässerte Stoff aus dem Gefäß ausgeleitet wird.

2. Verfahren nach Anspruch 1, dadurch gekennzeichnet, daß der Kolben bis zu einem Druck aufgepumpt wird, der größer ist als derjenige, auf den anschließend der zweite Teilraum gebracht wird, wenn das Druckmittel eingeleitet wird.

3. Verfahren nach einem der Ansprüche 1 oder 2, dadurch gekennzeichnet, daß der Behälter (1) mit dem Trenngitter (7) im unteren Teil angeordnet wird und daß der Stoff und der aufpumpbare Kolben (12) von oben in ihn eingeführt werden.

4. Verfahren nach einem der Ansprüche 1 bis 3, dadurch gekennzeichnet, daß der aufpumpbare Kolben (12) durch eine selbe Öffnung (2) wie der Stoff in den Behälter eingeführt wird.

5. Verfahren nach einem der Ansprüche 1 bis 4, dadurch gekennzeichnet, daß das Druckmittel über eine Verschlußklappe (14) des zweiten Teilraumes des Behälters (1) eingeleitet wird.

6. Verfahren nach einem der Ansprüche 1 bis 5, dadurch gekennzeichnet, daß für den aufpumpbaren Kolben (12) eine flexible Röhrenleitung (13) zum Einspeisen oder zum Ableiten eines Druckmittels vorgesehen wird, wobei die Röhrenleitung (13) durch eine Verschlußklappe (14) des zweiten Teilraumes des Behälters (1) verläuft.

7. Verfahren nach einem der Ansprüche 1 bis 6, dadurch gekennzeichnet, daß auf dem Boden des Behälters (1) ein Transportermittel (4) zum Ableiten des entwässerten Stoffes über eine zu diesem Zweck vorgesehene Tür (10) vorgesehen wird.

8. Verfahren nach Anspruch 7, dadurch gekennzeichnet, daß das Transportermittel einen Rotor (4) mit zum Behälter (1) koaxialen Blättern aufweist, wobei die Tür (10) auf der Höhe der Enden des Rotors (4) angeordnet ist.

9. Verfahren nach einem der Ansprüche 7 oder 8, dadurch gekennzeichnet, daß das Trenngitter (7) gegenüber der Unterseite der Seitenwand des Behälters (1) angeordnet ist, mit der sie eine Kammer (8) zur Rückgewinnung der Flüssigkeit definiert, die auf ihrem Boden mit einem Abzapfhahn (9) ausgestattet ist, wobei das Gitter (7) gegen das Transportermittel (4) konvergiert.

10. Verfahren nach einem der Ansprüche 1 bis 9, dadurch gekennzeichnet, daß derselbe aufpumpbare Kolben (12) für mehrere ähnliche Behälter (1) verwendet wird.

11. Verfahren nach einem der Ansprüche 1 bis 10, dadurch gekennzeichnet, daß die Stoffe Weintrauben sind, die in dem Behälter zu Wein verarbeitet werden, indem sie dort stehen gelassen werden, bis das der Trester auf der Flüssigkeit schwimmt, indem anschließend ein Abzapfhahn geöffnet wird, um diese Flüssigkeit abfließen zu lassen, und indem anschließend mittels des aufpumpbaren Kolbens der Trester so komprimiert wird, daß er nach dem Abfließen der ersten Flüssigkeit abgesetzt ist, um eine zweite Flüssigkeit zu erhalten, die über das Trenngitter (7) aus diesem Trester ausgepreßt wird.

12. Preßeinrichtung, die zur Durchführung des Verfahrens gemäß einem der Ansprüche 1 bis 11 in einem vorbestimmten Behälter geeignet ist, dadurch gekennzeichnet, daß sie einen aufpumpbaren Kolben aufweist, der aus folgendem gebildet ist: aus einer Hülle aus einem flexiblen, nicht elastischen Material, die zwei ähnliche, einander gegenüberliegende Endflächen (20, 21) aufweist, welche einen äußeren Umriß haben, der dem transversalen Querschnitt des Behälters (1) entspricht, und eine Seitenfläche (22) aufweist, die zwei einander gegenüberliegende Ränder aufweist, von denen jeder mit dem äußeren Rand einer der Endflächen (20, 21) verbunden ist, und aus einer Vielzahl von Verbindungsgliedern (23) gleicher Länge, die zwischen den Endflächen (20, 21) angeordnet sind.

13. Einrichtung nach Anspruch 12, dadurch gekennzeichnet, daß der Kolben (12) in seiner Gesamtheit, einschließlich des Zentrums, aufpumpbar ist.

14. Einrichtung nach einem der Ansprüche 12 oder 13, dadurch gekennzeichnet, daß sie eine flexible Röhrenleitung (13) zum Einleiten oder Ableiten eines Druckmittels in den oder aus dem aufpumpbaren Kolben (12) sowie eine Verechlußklappe (14) für den Behälter (1), durch die die Röhrenleitung (13) verläuft, aufweist.

15. Einrichtung nach Anspruch 14, dadurch gekennzeichnet, daß die verschlußklappe (14) ebenfalls von einer Röhrenleitung (15) zum Einleiten oder Ausleiten eines Druckmittels in den oder aus dem Behälter durchlaufen wird, wobei jede der Röhrenleitungen (13, 14) dafür vorgesehen ist, über einen Hahn (16, 17) und einen Druckregler (18, 19) mit einer Druckmittelquelle verbunden zu werden.

## Claims

1. Process for extracting a liquid contained in a substance, in which said substance is introduced into a vessel (1) fitted with a screen (7) for separating liquid and solid against which the substance is then compressed, with an inflatable piston, so that the liquid flows through the screen (7), and in which it is provided that said vessel and said inflatable piston are adapted to cooperate such that said piston, in its deflated state, can be introduced into the vessel, the extraction of the liquid comprising the introduction into the vessel of the substance then of the piston in its deflated state and then the inflation of the latter, characterized in that:
- it is provided that said vessel (1) and said inflatable piston (12) are furthermore adapted to cooperate such that in the vessel, in its inflated state, the piston is capable of forming a sliding transverse partition dividing the vessel, tightly, into two compartments, the first of which contains the separation screen (7) while the second can be closed and accommodate a pressure agent; and
- the extraction of the liquid is carried out by introducing into the vessel the substance then the piston (12) in its deflated state and then inflating the latter such that the substance is located in said first compartment, then closing said second compartment and then injecting said pressure agent into it such that the inflated piston rests against and compresses the substance, the pressure agent then being removed from said second compartment, the piston (12) deflated and removed from the vessel (1) and the drained substance removed from the vessel.

2. Process according to claim 1, characterized in that the piston is inflated to a pressure greater than that to which the said second compartment is then raised when injecting said pressure agent into it.

3. Process according to any one of claims 1 or 2, characterized in that said vessel (1) is arranged with said separation screen (7) situated at the base, and the substance and the inflatable piston (12) are introduced into it from above.

4. Process according to any one of claims 1 to 3, characterized in that the inflatable piston (12) is introduced into the vessel through the same opening (2) as the substance.

5. Process according to any one of claims 1 to 4, characterized in that said pressure agent is injected through a trap (14) closing the second compartment of the vessel (1).

6. Process according to any one of claims 1 to 5, characterized in that a flexible tube (13) is provided for the inflatable piston (12) for the supply or evacuation of a pressure agent, said tube (13) passing through a trap (14) closing the second compartment of the vessel (1).

7. Process according to any one of claims 1 to 6, characterized in that means of transport are provided at the bottom of the vessel (1) to evacuate the drained substance through a gate (10) provided for this purpose.

8. Process according to claim 7, characterized in that said means of transport comprise a bladed rotor (4) coaxial to the vessel (1), said gate (10) being arranged at the ends of the rotor (4).

9. Process according to any one of claims 7 and 8, characterized in that said separation screen (7) is arranged facing the bottom of the side wall of the vessel (1), with which it defines a liquid recovery chamber (8), the bottom of which is fitted with a draw-off cock (9), said screen (7) leading towards said means of transport (4).

10. Process according to any one of claims 1 to 9, characterized in that a single inflatable piston (12) is used for numerous similar vessels (1).

11. Process according to any one of claims 1 to 10, characterized in that said substance comprises grapes which are made into wine in said vessel by leaving them there until the marc floats on the liquid, then opening a draw-off cock to allow this liquid to flow, then using said inflatable piston to compress the marc as deposited after the first liquid has flowed, so as to obtain a second liquid which expresses itself from this marc through said separation screen (7).

12. Pressing assembly suitable for carrying out the process according to any one of claims 1 to 11 in a predetermined vessel, characterized in that it comprises an inflatable piston formed by a cover made from non-elastic flexible material having two facing similar opposite end-panels (20, 21) having an external outline corresponding to the cross-section of said vessel (1) and a side panel (22) having two opposite edges each joined to the external edge of one of the end-panels (20,21) and by a plurality of ties (23) of the same length arranged between said end-panels (20, 21).

13. Assembly according to claim 12, characterized in that said piston (12) is inflatable in its totality including in the centre.

14. Assembly according to one of claims 12 or 13, characterized in that it includes a flexible tube (13) for the supply or evacuation of a pressure agent into or out of the inflatable piston (12), as well as a trap (14) closing said vessel (1), through which said tube (13) passes.

15. Assembly according to claim 14, characterized in that said closure trap (14) is also crossed by a tube (15) for the injection or evacuation of a pressure agent into or out of said vessel, each of said tubes (13, 14) being provided in order to be linked to a source of pressure agent via a valve (16, 17) and a pressure regulator (18, 19).
